# FASCICULE DE BREVET EUROPEEN

(11) **EP 0 638 386 B1**
(45) Date de publication et mention de la délivrance du brevet: **04.06.1997**
(21) Numéro de dépôt: 94460028.7
(22) Date de dépôt: 03.08.1994
(51) Int. Cl.: B23K 11/11

(54) **Tête de machine de soudage par points ou de sertissage**
Kopf einer Punktschweissmaschine
Spot welding machine head

(30) Priorité: 11.08.1993 FR 9310023
(43) Date de publication de la demande: 15.02.1995
(73) Titulaire: SOUDAX EQUIPMENT SRL, 78680 Epone (FR)
(72) Inventeur: Leon, Paul, 27630 Berthenonville (FR)
(74) Mandataire: Le Guen, Louis François

(56) Documents cités:
- EP-A- 0 273 133
- GB-A- 120 028

## Description

La présente invention concerne une tête de machine de soudage par points ou de sertissage.

Une machine de soudage par points comprend deux électrodes prévues pour pouvoir enserrer les pièces à souder et destinées à fournir, auxdites pièces à souder, un courant électrique de forte intensité afin d'élever localement leur température et de former ainsi un point de soudure. Lors de l'opération de soudage, les électrodes sont appliquées sur les pièces à souder avec une force déterminée.

Généralement, une électrode est fixe alors que l'autre est mobile axialement. La seconde est montée dans un dispositif, appelé tête de soudage, qui commande l'électrode mobile, d'une part, pour assurer son déplacement lors de sa mise en place sur une pièce et, d'autre part, pour exercer une force sur les pièces.

Une machine de sertissage comprend également une tête telle qu'il vient d'être décrit avec une électrode mobile qui exerce une force sur la pièce à sertir. Elle comporte une seconde électrode, mais celle-ci ne se trouve pas nécessairement dans l'axe de la première électrode. L'objet de l'invention est également une tête d'une machine de sertissage.

Des machines de soudage ou de sertissage sont généralement pilotées par un calculateur qui, pendant l'opération de soudage ou de sertissage, calcule, en fonction de paramètres mesurés, tels que la température du point de soudage ou de sertissage, tels que le déplacement relatif des électrodes, tels que l'intensité du courant de soudage ou de sertissage et/ou l'intensité de l'effort sur les pièces à souder, les valeurs pour l'intensité de courant de soudage ou de sertissage et/ou pour l'intensité de la force appliquée sur les pièces, etc.

Le temps de réponse de la source de courant de soudage ne pose pas de réels problèmes et ne fait pas l'objet de la présente invention.

Pour l'application de la force sur les pièces à souder ou à sertir, l'électrode mobile des têtes de soudage ou de sertissage connues est généralement commandée par un ou deux vérins pneumatiques, l'un assurant les déplacements de l'électrode pour son positionnement sur une pièce à souder et l'autre permettant l'application de la force de serrage des pièces à souder.

De tels moyens ne peuvent pas être satisfaisants pour obtenir des temps de réponse suffisamment courts qui éviteraient la formation, à l'interface entre les électrodes et les pièces à souder ou à sertir, de microarcs, de projections de métal, etc. ayant lieu généralement pendant les opérations de soudage ou de sertissage et entraînant des défauts métallurgiques des points, des variations de la santé métallurgique des points, et des réductions de la durée de vie des électrodes.

On connaît également par le document de brevet EP-A-273 133 un appareil de soudage électrique par résistance constitué de deux électrodes se faisant face et dirigées l'une vers l'autre par une force élastique. Lesdites électrodes sont respectivement supportées par des supports conducteurs, lesquels sont soumis, lorsqu'ils sont parcourus par le courant de soudage, à des forces électromagnétiques tendant à les éloigner l'un de l'autre. De par la structure même de l'appareil de soudage, il résulte de ces forces un mouvement de rapprochement mutuel des électrodes.

Un inconvénient majeur de cet appareil est que l'intensité de la force de serrage que les électrodes exercent sur les pièces à souder est seulement fonction du courant de soudage qui parcourt chaque conducteur. Il en découle un manque de contrôle vis-à-vis de l'application de la force de serrage sur lesdites pièces au cours de l'opération de soudage.

Le but de l'invention est donc de proposer une tête d'une machine de soudage par points ou d'une machine de sertissage comprenant une électrode destinée, d'une part, à fournir le courant de soudage ou de sertissage à une pièce à souder sur une autre ou à sertir et, d'autre part, à exercer, pendant l'opération de soudage ou de sertissage, une force sur ladite pièce, ladite force étant dérivée d'une ou plusieurs forces électromagnétiques dont chacune est engendrée par l'effet d'un courant circulant dans un conducteur plongé dans un champ magnétique, tête dont le temps de réponse d'application de la force sur les pièces ou la pièce par l'électrode mobile soit le plus faible possible pour permettre de résoudre les problèmes évoqués ci-dessus.

A cet effet, une tête d'une machine de soudage par points ou d'une machine de sertissage selon l'invention est remarquable en ce que ledit champ magnétique est engendré par un électroaimant.

Selon une autre caractéristique de l'invention, le courant qui circule dans ledit ou chaque conducteur est le courant de soudage ou de sertissage.

Selon une autre caractéristique de l'invention, le courant qui circule dans ledit ou chaque conducteur est le courant délivré par une source de courant commandée par une unité de commande et de contrôle.

Selon une autre caractéristique de l'invention, l'enroulement de l'électroaimant est alimenté par une source de courant dont l' intensité est commandée par une ou ladite unité de commande et de contrôle.

Selon une autre caractéristique de l'invention, ledit ou chaque conducteur est prévu pour se déplacer, par exemple par pivotement, dans un plan coupant les lignes de champ magnétique.

Selon un mode de réalisation, l'électrode mobile est solidaire dudit conducteur. Elle est par exemple fixée à son extrémité libre.

Selon un autre mode de réalisation, ladite électrode est fixée à l'extrémité libre d'un bras prévu pour pivoter en même temps que ledit conducteur. Avantageusement, ledit bras est isolé électriquement dudit conducteur et les extrémités dudit conducteur sont respectivement reliées aux bornes d'une source de courant, ledit courant de soudage traversant ledit bras.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue schématique d'une machine à souder équipée d'une tête selon un premier mode de réalisation de l'invention, et
la Fig. 2 est une vue schématique d'une machine à souder équipée d'une tête selon un second mode de réalisation de l'invention.

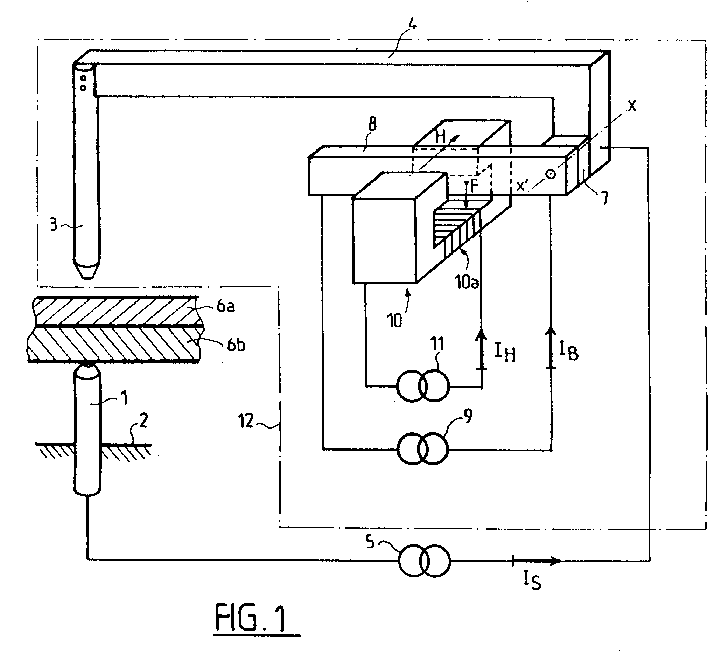

La machine de soudage représentée schématiquement à la Fig. 1 comprend une électrode fixe 1 solidaire du bâti 2 de la machine et une électrode mobile 3 constituant un élément de la tête de la machine.

L'électrode mobile 3 est montée à l'extrémité libre d'un bras 4 prévu pour pouvoir pivoter autour d'un axe xx'. Le bras 4 est conducteur électrique et a son extrémité pivotante qui est reliée à une première borne d'une source de courant 5 dont l'autre borne est reliée à l'électrode fixe 1.

Les électrodes 1 et 3 sont reliées aux deux bornes de la source 5 pour être alimentées par le courant de soudage I_{S}. Les électrodes 1 et 3 enserrent deux pièces à souder 6a et 6b.

Sur l'extrémité pivotante du bras 4, est monté, par l'intermédiaire d'un bloc isolant électriquement (7), une première extrémité d'un conducteur 8. Ce dernier pivote donc autour de l'axe xx' en même temps que le bras 4. A l'extrémité pivotante du conducteur 8, est reliée une première borne d'une source de courant 9 dont l'autre borne est reliée à l'extrémité libre du conducteur 8. La source de courant 9 est prévue pour délivrer un courant I_{B}.

Lorsque le conducteur 8 pivote autour de l'axe xx', il se déplace dans un plan qui est situé dans l'entrefer d'un électroaimant 10 dont les bornes de l'enroulement 10a sont respectivement reliées aux bornes d'une source de courant 11 délivrant un courant I_{H}. Le plan de pivotement du conducteur 8 coupe les lignes du champ magnétique délivré par l'électroaimant 10.

Ce sont donc le conducteur 8 et la source de courant 9, l'électroaimant 10 et la source de courant 11 ainsi que l'électrode mobile 3 qui constituent une tête de soudage 12 selon l'invention.

Le fonctionnement de la tête de soudage 12 selon un mode de réalisation de l'invention est le suivant. On commande d'abord la source de courant 11 pour qu'elle alimente l'électroaimant 10 qui engendre alors un champ magnétique H. On commande ensuite la source de courant 9 si bien que le conducteur 8 est soumis à une force verticale F dont le siège se trouve dans l'entrefer de l'électroaimant 10. Elle est dirigée vers le bas dans la mesure où le courant I_{B} et le champ magnétique H sont correctement orientés.

A ce moment là, le bras 4 est soumis à un couple si bien que l'électrode 3 exerce une force d'appui sur les pièces à souder 6a et 6b. On commande alors la source de courant 5 pour qu'elle délivre le courant de soudage I_{S}.

Pour amener l'électrode mobile 3 en contact sur la pièce à souder supérieure 6a et établir une préforce de serrage, on commande la source 9 de manière qu'elle délivre un courant I_{B} de relativement faible intensité. La force F est donc d'intensité relativement faible jusqu'à l'établissement du courant de soudage I_{S}.

Pour moduler l'intensité de la force F, il est possible de faire varier l'intensité du courant I_{B} de la source 9 qui alimente le bras 8 ou de faire varier l'intensité du courant I_{H} dans l'électroaimant 10. Ainsi, un calculateur tel que celui qui est mentionné dans le préambule de la présente description pilote l'une ou l'autre ou les deux sources de courant 9 et/ou 11 pour moduler l'intensité de la force de serrage des pièces 6a et 6b.

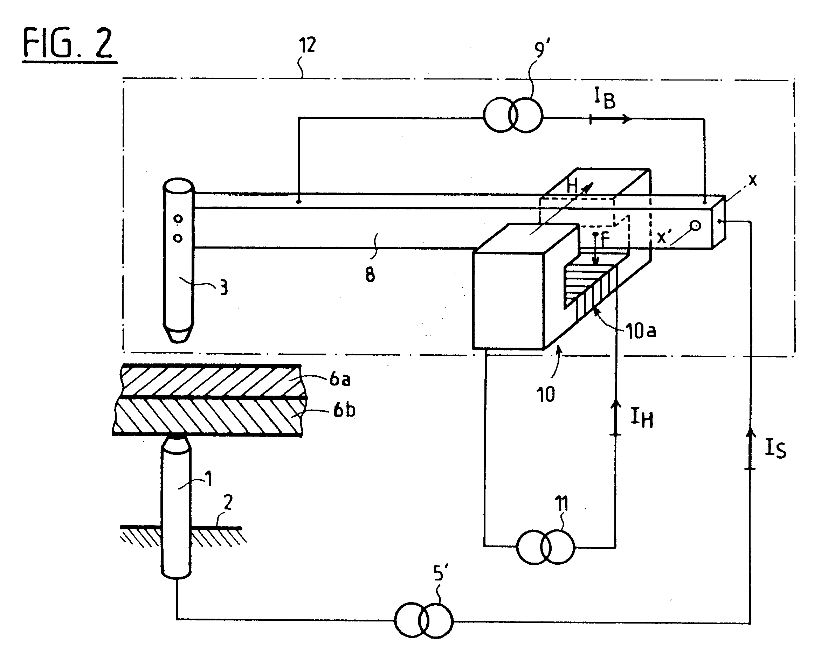

La Fig. 2 représente un autre mode de réalisation d'une tête de soudage selon l'invention. Les mêmes éléments que ceux déjà présents dans le premier mode de réalisation portent les mêmes références.

Ce mode de réalisation diffère du précédent par le fait qu'il ne comporte pas de bras 4 et que l'électrode mobile 3 est fixée à l'extrémité libre du conducteur 8. La source 5' qui délivre le courant de soudage I_{S} a ses bornes qui sont respectivement reliées, d'une part, à l'électrode fixe 1 et, d'autre part, à l'extrémité pivotante du conducteur 8 opposée à celle qui reçoit l'électrode mobile 3. Ainsi, le courant de soudage I_{S} délivré par la source 5' circule dans le conducteur 8 et, sous l'action combinée du champ magnétique H engendré par l'électroaimant 10, engendre la force F qui s'exerce alors sur le conducteur 8 et donc sur l'électrode mobile 3.

La source de courant 9' dont les bornes sont respectivement reliées à l'extrémité pivotante du conducteur 8 et à un point du conducteur 8 proche de l'électrode mobile 3 sert à établir la préforce de serrage des pièces à souder 6a et 6b. Elle peut être pilotée par le calculateur mentionné ci-dessus et permettre ainsi la modulation de l'intensité de la force F.

Dans ce mode de réalisation, le conducteur 8 et la source de courant 9', l'électroaimant 10 et la source de courant 11 ainsi que l'électrode 3 constituent une tête de soudage 12 selon l'invention.

On notera que les têtes 12 représentées peuvent constituer des têtes de machine de sertissage.

On notera encore que la disposition des différents éléments des têtes 12 pourrait être différente, notamment l'axe de pivotement des conducteurs 8 qui pourrait ne pas être situé à leurs extrémités mais sur leur longueur.

## Revendications

1. Tête d'une machine de soudage par points ou d'une machine de sertissage comprenant une électrode (3) destinée, d'une part, à fournir le courant de soudage ou de sertissage (I_{S}) à une pièce (6a) à souder sur une autre (6b) ou à sertir et, d'autre part, à exercer, pendant l'opération de soudage ou de sertissage, une force (F) sur ladite pièce (6a), ladite force (F) étant dérivée d'une ou plusieurs forces électromagnétiques dont chacune est engendrée par l'effet d'un courant (I_{S}, I_{B}) circulant dans un conducteur (8) plongé dans un champ magnétique, caractérisée en ce que ledit champ magnétique est engendré par un électroaimant (10).

2. Tête selon la revendication 1, caractérisée en ce que le courant qui circule dans ledit ou chaque conducteur (8) est le courant de soudage ou de sertissage (I_{S}).

3. Tête selon la revendication 1, caractérisée en ce que le courant qui circule dans ledit ou chaque conducteur (8) est le courant délivré par une source de courant (9, 9') commandée par une unité de commande et de contrôle.

4. Tête selon l'une des revendications précédentes, caractérisée en ce que l'enroulement (10a) de l'électroaimant (10) est alimenté par une source de courant (11) dont l'intensité est commandée par une ou ladite unité de commande et de contrôle.

5. Tête selon selon l'une des revendications précédentes, caractérisée en ce que ledit ou chaque conducteur (8) est prévu pour se déplacer dans un plan coupant les lignes dudit champ magnétique correspondant.

6. Tête selon l'une des revendications précédentes, caractérisée en ce que ledit ou chaque conducteur (8) est prévu pour pivoter dans un plan coupant les lignes dudit champ magnétique correspondant.

7. Tête selon la revendication 5 ou 6, caractérisée en ce que l'électrode mobile (3) est solidaire dudit conducteur (8).

8. Tête selon la revendication 6, caractérisée en ce que ladite électrode mobile (3) est fixée à l'extrémité libre dudit conducteur (8).

9. Tête selon la revendication 6, caractérisée en ce que ladite électrode (3) est fixée à l'extrémité libre d'un bras (4) prévu pour pivoter en même temps que ledit conducteur (8).

10. Tête selon la revendication 9, caractérisée en ce que ledit bras (4) est isolé électriquement dudit conducteur (8) et en ce que les extrémités dudit conducteur (8) sont respectivement reliées aux bornes d'une source de courant (9), ledit courant de soudage traversant ledit bras (4).

## Claims

1. Spot welding machine or crimping machine head comprising an electrode (3) designed on the one hand to supply the welding or crimping current (I_{B}) to a part (6a) to be welded to another part (6b) or to be crimped and on the other hand to exert a force (F) on the said part (6a) during the welding or crimping operation, the said force (F) deriving from one or more electromagnetic forces each of which is generated by the effect of a current (I_{S}, I_{B}) circulating in a conductor (8) immersed in a magnetic field, characterised in that the said magnetic field is generated by an electromagnet (10).

2. Head as per claim 1, characterised in that the current passing through the said conductor or each conductor (8) is the welding current or crimping current (I_{S}).

3. Head as per claim 1, characterised in that the current passing through the said conductor or each conductor (8) is the current supplied by a current source (9, 9') controlled by a control and actuator unit.

4. Head as per one of the preceding claims, characterised in that the winding (10a) of the electromagnet (10) is supplied by a current source (11) whose intensity is controlled by a, or the said, control and actuator unit.

5. Head as per one of the preceding claims, characterised in that the said conductor or each conductor (8) is designed to move in a plane intersecting the lines of the said corresponding magnetic field.

6. Head as per one of the preceding claims, characterised in that the said conductor or each conductor (8) is designed to pivot in a plane intersecting the lines of the said corresponding magnetic field.

7. Head as per claim 5 or 6, characterised in that the movable electrode (3) is integral with the said conductor (8).

8. Head as per claim 6, characterised in that the said movable electrode (3) is fixed to the free end of the said conductor (8).

9. Head as per claim 6, characterised in that the said electrode (3) is fixed to the free end of an aim (4) designed to pivot at the same time as the said conductor (8).

10. Head as per claim 9, characterised in that the said aim (4) is isolated electrically from the said conductor (8) and that the ends of this conductor (8) are in turn linked to the terminals of a current source (9), the said welding current passing through this arm (4).

## Patentansprüche

1. Kopf einer Punktschweißmaschine oder einer Crimpmaschine enthaltend eine Elektrode (3), welche dazu dient, einerseits den Strom für das Schweißen oder Crimpen (I_{S}) an ein mit einem anderen Teil (b) zu verschweißendes Teil (6a) zu liefern, und andererseits während dem Schweißen oder Crimpen eine Kraft (F) auf das Teil (6a) auszuüben, und diese Kraft (F) aus einer oder mehreren magnetischen Kräften abgeleitet wird, von denen jede einzelne durch die Wirkung eines Stromes (I_{S}, I_{B}) erzeugt wird, welcher in einem Leiter (8) zirkuliert, der in ein Magnetfeld eingetaucht ist,
**dadurch gekennzeichnet**, **daß**
dieses Magnetfeld durch einen Elektromagneten erzeugt wird.

2. Kopf nach Anspruch 1,
**dadurch gekennzeichnet**, **daß**
der in dem oder den Leitern (8) zirkulierende Strom der Schweißstrom oder Crimpstrom (I_{S}) ist.

3. Kopf nach Anspruch 1,
**dadurch gekennzeichnet**, **daß**
der in dem oder den Leitern (8) zirkuliernde Strom der von einer Stromquelle (9, 9') gelieferte Strom ist, welche von einer Steuer- und Kontrolleinheit gesteuert wird.

4. Kopf nach einem der vorausgegangenen Ansprüche,
**dadurch gekennzeichnet**, **daß**
die Wicklung (10a) des Elektromagneten (10) von einer Stromquelle (11) gespeist wird, deren Stärke mit Hilfe der Steuer- und Kontrolleinheit gesteuert wird.

5. Kopf nach einem der vorausgegangenen Ansprüche,
**dadurch gekennzeichnet**, **daß**
der oder die Leiter (8) sich in einer Ebene bewegen können, welche die Linien des entsprechenden Magnetfeldes schneidet.

6. Kopf nach einem der vorausgegangenen Ansprüche,
**dadurch gekennzeichnet**, **daß**
der oder die Leiter (8) in einer Ebene verschwenkt werden können, welche die Linien des entsprechenden Magnetfeldes schneidet.

7. Kopf nach einem der Ansprüche 5 oder 6,
**dadurch gekennzeichnet**, **daß**
die bewegliche Elektrode (3) mit dem Leiter (8) einstückig ausgebildet ist.

8. Kopf nach Anspruch 6,
**dadurch gekennzeichnet**, **daß**
die bewegliche Elektrode (3) an dem freien Endteil des Leiters (8) befestigt ist.

9. Kopf nach Anspruch 6,
**dadurch gekennzeichnet**, **daß**
die Elektrode (3) an dem freien Endteil eines Armes (4) befestigt ist, welcher zusammen mit dem Leiter (8) verschwenkt werden kann.

10. Kopf nach Anspruch 9,
**dadurch gekennzeichnet**, **daß**
der Arm (4) elektrisch gegen den Leiter (8) isoliert ist, und dadurch, daß die Endteile des Leiters (8) jeweils an die Kabelklemmen einer Stromquelle (9) angeschlossen sind, und daß der Schweißstrom diesen Arm (4) durchströmt.
